(19) Europäisches Patentamt
European Patent Office
Office européen des brevets

(11) EP 4 693 568 A2

(12) EUROPEAN PATENT APPLICATION

(43) Date of publication:
**11.02.2026 Bulletin 2026/07**

(21) Application number: **25184028.6**

(22) Date of filing: **19.06.2025**

(51) International Patent Classification (IPC):
***H01M 10/0567*** *(2010.01)* ***H01M 10/0569*** *(2010.01)*
***H01M 10/0587*** *(2010.01)* ***H01M 10/052*** *(2010.01)*

(52) Cooperative Patent Classification (CPC):
**H01M 10/0587; H01M 10/052; H01M 10/0567; H01M 10/0569;** H01M 2300/0037

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **09.08.2024 KR 20240106672**

(71) Applicant: **SAMSUNG SDI CO., LTD.**
**Yongin-si, Gyeonggi-do 17084 (KR)**

(72) Inventors:
- **BAE, Tae Hyon**
  **Yongin-si, Gyeonggi-do 17084 (KR)**
- **LEE, Harim**
  **Yongin-si, Gyeonggi-do 17084 (KR)**
- **KIM, Sanghyung**
  **Yongin-si, Gyeonggi-do 17084 (KR)**
- **SON, Seunghyeon**
  **Yongin-si, Gyeonggi-do 17084 (KR)**
- **LEE, Sangheon**
  **Yongin-si, Gyeonggi-do 17084 (KR)**
- **KIM, Cheonsoo**
  **Yongin-si, Gyeonggi-do 17084 (KR)**

(74) Representative: **Gulde & Partner**
**Patent- und Rechtsanwaltskanzlei mbB**
**Berliner Freiheit 2**
**10785 Berlin (DE)**

# (54) BATTERY CELL AND RECHARGEABLE LITHIUM BATTERY INCLUDING THE SAME

(57) A battery cell and a rechargeable lithium battery including the battery cell are disclosed. The battery cell may include a wound electrode assembly including a positive electrode, a negative electrode, and a separator between the positive electrode and the negative electrode, and an electrolyte impregnated in/with the wound electrode assembly. The wound electrode assembly may include a pair of curved sections on two opposite (e.g., opposite facing) sides of the wound electrode assembly and a flat section between the pair of curved sections. The electrolyte may include a non-aqueous (e.g., water-insoluble) organic solvent, a lithium salt, and an additive. The non-aqueous (e.g., water-insoluble) organic solvent may include ethylene carbonate and ethyl propionate. The additive may include a compound represented by Chemical Formula 1.



Processed by Luminess, 75001 PARIS (FR)

## Description

## BACKGROUND

### 1. Field

One or more embodiments of the present disclosure relate to a battery cell and a rechargeable lithium battery including the battery cell.

### 2. Description of the Related Art

Recently, with the rapid proliferation and spread of electronic devices that use batteries (such as mobile phones, laptop computers, and/or the like) and/or electric vehicles, the demand for rechargeable batteries with high energy density and high capacity (e.g., electrical capacity) is rapidly increasing. Therefore, intensive research and development have been conducted to improve or enhance performance of rechargeable lithium batteries.

A rechargeable lithium battery includes a positive electrode, a negative electrode, and an electrolyte. The positive electrode and the negative electrode include an active material in which intercalation and deintercalation may occur. The rechargeable lithium battery generates electrical energy through oxidation and reduction reactions if (e.g., when) lithium ions are intercalated and deintercalated.

A lithium salt dissolved in a non-aqueous (e.g., water-insoluble) organic solvent is used as the electrolyte of the rechargeable lithium battery. The characteristics of the rechargeable lithium battery are exhibited by complex electrochemical reactions between the positive electrode and the electrolyte and/or between the negative electrode and the electrolyte. Accordingly, the use of an appropriate or suitable electrolyte is one of important variables for the improvement or enhancement of the rechargeable lithium battery.

## SUMMARY

The invention is defined by the appended claims. The description that follows is subjected to this limitation. Any disclosure lying outside the scope of said claims is only intended for illustrative as well as comparative purposes.

One or more aspects of embodiments of the present disclosure are directed toward a battery cell whose energy density is increased or enhanced and whose side reaction (or a degree or occurrence of the side reaction) is reduced (e.g., directed toward a battery cell with increased energy density and reduced side reactions (or a decrease in the degree or occurrence of such reactions).

One or more aspects of embodiments of the present disclosure are directed toward a pouch-type (or kind) rechargeable lithium battery including the battery cell.

Additional aspects of embodiments will be set forth in part in the description which follows and, in part, will be apparent from the description or may be learned by practice of the presented embodiments of the disclosure.

According to one or more embodiments of the present disclosure, a battery cell includes: a wound electrode assembly, wherein the wound electrode assembly includes a positive electrode, a negative electrode, and a separator between the positive electrode and the negative electrode; and an electrolyte impregnated in/with the wound electrode assembly.

The negative electrode includes: a negative electrode current collector; a negative electrode active material layer on at least one surface of the negative electrode current collector; and a negative electrode tab on an uncoated portion of the negative electrode current collector.

The wound electrode assembly includes a pair of curved sections on two opposite (e.g., opposite facing) sides of the wound electrode assembly; and a flat section between the pair of curved sections.

A ratio of an area of the negative electrode active material layer in the pair of curved sections to a total area of the negative electrode active material layer is in a range of 18% to 50%.

The electrolyte includes a non-aqueous (e.g., water-insoluble) organic solvent, a lithium salt, and an additive.

The non-aqueous (e.g., water-insoluble) organic solvent includes ethylene carbonate and ethyl propionate.

A volume ratio of the ethylene carbonate to the non-aqueous (e.g., water-insoluble) organic solvent is in a range of 20 vol% to 50 vol%.

A volume ratio of the ethyl propionate to the non-aqueous (e.g., water-insoluble) organic solvent is in a range of 50 vol% to 80 vol%.

The additive includes a compound represented by Chemical Formula 1.

An amount of the additive is in a range of 1 part by weight to 10 parts by weight relative to (e.g., based on) 100 parts by weight of the electrolyte.

Chemical Formula 1

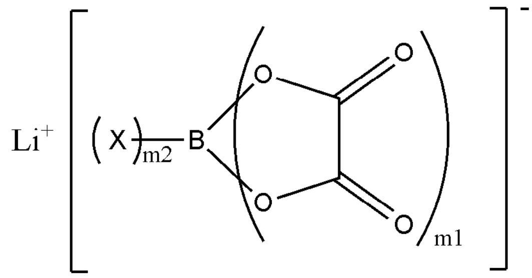

In Chemical Formula 1,

X is a halogen atom (e.g., F, Cl, Br, or I) or a C1 to C10 haloalkyl group,
m1 is 1 or 2,
m2 is 2 if (e.g., when) m1 is 1, and
m2 is 0 if (e.g., when) m1 is 2.

According to one or more embodiments of the present disclosure, a rechargeable lithium battery includes the battery cell as described in one or more embodiments; and a pouch-type (or kind) casing that accommodates the battery cell.

## BRIEF DESCRIPTION OF THE DRAWINGS

The accompanying drawings, together with the specification, illustrate embodiments of the subject matter of the present disclosure, and, together with the description, serve to explain principles of embodiments of the subject matter of the present disclosure.

FIG. 1 is a simplified conceptual diagram illustrating a rechargeable lithium battery according to one or more embodiments of the present disclosure.
FIG. 2 is a simplified view illustrating a pouch-type (or kind) rechargeable lithium battery according to one or more embodiments of the present disclosure.
FIG. 3 is a simplified view illustrating an unwound electrode assembly according to one or more embodiments of the present disclosure.
FIG. 4 is a detailed view illustrating an unwound electrode assembly according to one or more embodiments of the present disclosure.
FIG. 5 is a simplified view illustrating a wound electrode assembly according to one or more embodiments of the present disclosure.
FIG. 6 is a cross-sectional view taken along the line A-A' of a wound electrode assembly as illustrated in FIG. 5.
FIG. 7 is a simplified one directional view illustrating a wound electrode assembly according to one or more embodiments of the present disclosure.
FIG. 8 is a simplified view illustrating an unwound negative electrode according to one or more embodiments of the present disclosure.
FIG. 9 is a simplified view illustrating a wound electrode assembly according to one or more embodiments of the present disclosure.
FIG. 10 is an evaluation result according to an evaluation example.
FIG. 11 is a simplified view illustrating a stress distribution of a wound electrode assembly.

## DETAILED DESCRIPTION

In order to sufficiently understand the aspects and features of the present disclosure, the subject matter of the present disclosure will be described below in more detail with reference to the accompanying drawings. It should be noted, however, that the present disclosure is not limited to the disclosed embodiments and may be implemented in one or more suitable forms. Rather, these embodiments are provided as examples, by referring to the drawings, to explain the aspects and features of the present disclosure to those skilled in the art.

In the present disclosure, it will be understood that, if (e.g., when) an element is referred to as being "on" another

element, the element may be directly on the other element or intervening elements may be present therebetween. In contrast, if (e.g., when) an element is referred to as being "directly on" another element, no intervening elements are present therebetween.

In the drawings, thicknesses of one or more components may be exaggerated for effectively illustrating the technical contents.

Like reference numerals refer to like elements throughout, and duplicative descriptions thereof may not be provided in the present disclosure.

Unless otherwise noted in the present disclosure, the expression of singular form may include the expression of plural form. The terms "includes/has" and/or "including/having" used in the present disclosure do not exclude the presence or addition of one or more other components.

As used herein, the term "combination thereof" may refer to a mixture, a stack, a composite, a copolymer, an alloy, a blend, a reaction product, and/or the like of constituents.

Unless otherwise defined in the present disclosure, a particle diameter may be an average particle diameter. Also, a particle diameter may refer to an average particle diameter ($D_{50}$) where a cumulative volume is 50 volume % in a particle size distribution. The average particle diameter ($D_{50}$) may be measured by any suitable methods that are generally available to or generally used by those skilled in the art, for example, by a particle size analyzer and/or may also be measured by utilizing a transmission electron microscope (TEM) image and/or a scanning electron microscope (SEM) image. As used herein, if (e.g., when) a definition is not otherwise provided, the average particle diameter refers to a diameter ($D_{50}$) of particles having a cumulative volume of 50 volume% in the particle size distribution that is obtained by measuring the size (e.g., diameter or major axis length) of 20 particles at random in a scanning electron microscope (SEM) image. In one or more embodiments, a dynamic light-scattering (DLS) measurement device may be used to perform a data analysis, the number of particles is counted for each particle size range, and then from this data, an average particle diameter ($D_{50}$) value may be obtained through a calculation. Also, a laser scattering method may be utilized to measure the average particle diameter ($D_{50}$). In the laser scattering method, a target particle is distributed in a dispersion solvent, introduced into a laser scattering particle measurement device (e.g., MT3000 commercially available from Microtrac, Inc), irradiated with ultrasonic waves of 28 kHz at a power of 60 W, and then an average particle diameter ($D_{50}$) is calculated in the 50% standard of particle diameter distribution in the measurement device. In one or more embodiments, if (e.g., when) particles are spherical (e.g., substantially spherical), "diameter" or "size" refers to a particle diameter, and if (e.g., when) the particles are non-spherical (e.g., substantially non-spherical), the "diameter" or "size" refers to a major axis length.

In the present disclosure, unless otherwise separately defined, the term "substituted" may refer to that at least one hydrogen of a substituent or a compound is substituted by deuterium, a halogen group, a hydroxyl group, an amino group, a C1 to C30 amine group, a nitro group, a C1 to C40 silyl group, a C1 to C30 alkyl group, a C1 to C10 alkylsilyl group, a C6 to C30 arylsilyl group, a C3 to C30 cycloalkyl group, a C3 to C30 heterocycloalkyl group, a C6 to C30 aryl group, a C2 to C30 heteroaryl group, C1 to C20 alkoxy group, a C1 to C10 fluoroalkyl group, a cyano group, and/or a (e.g., any suitable) combination thereof.

For example, the term "substituted" may refer to that at least one hydrogen of a substituent or a compound is substituted by deuterium, a halogen group, a C1 to C30 alkyl group, a C1 to C10 alkylsilyl group, a C6 to C30 arylsilyl group, a C3 to C30 cycloalkyl group, a C3 to C30 heterocycloalkyl group, a C6 to C30 aryl group, a C2 to C30 heteroaryl group, a C1 to C10 fluoroalkyl group, or a cyano group. For example, the term "substituted" may refer to that at least one hydrogen of a substituent or a compound is substituted by deuterium, a halogen group, a C1 to C20 alkyl group, a C6 to C30 aryl group, a C1 to C10 fluoroalkyl group, or a cyano group. In one or more embodiments, the term "substituted" may refer to that at least one hydrogen of a substituent or a compound is substituted by deuterium, a halogen group, a C1 to C5 alkyl group, a C6 to C18 aryl group, a C1 to C5 fluoroalkyl group, or a cyano group. For example, the term "substituted" may refer to that at least one hydrogen of a substituent or a compound is substituted by deuterium, a cyano group, a halogen group, a methyl group, an ethyl group, a propyl group, a butyl group, a phenyl group, a biphenyl group, a terphenyl group, a trifluoromethyl group, or a naphthyl group.

In the present disclosure, the term "haloalkyl group" may refer to an alkyl group in which one or more or all of hydrogen atoms are substituted with halogen atoms.

FIG. 1 is a simplified conceptual diagram illustrating a rechargeable lithium battery according to one or more embodiments of the present disclosure. Referring to FIG. 1, a rechargeable lithium battery may include a positive electrode 10, a negative electrode 20, a separator 30, and an electrolyte ELL.

The positive electrode 10 and the negative electrode 20 may be spaced and/or apart (e.g., spaced apart or separated) from each other across the separator 30. The separator 30 may be between the positive electrode 10 and the negative electrode 20. The positive electrode 10, the negative electrode 20, and the separator 30 may be in contact with the electrolyte ELL. The positive electrode 10, the negative electrode 20, and the separator 30 may be impregnated in/with the electrolyte ELL.

The electrolyte ELL may be a medium by which lithium ions are transferred between the positive electrode 10 and the negative electrode 20. In the electrolyte ELL, the lithium ions may move through the separator 30 toward one of the

positive electrode 10 and the negative electrode 20.

**Positive Electrode 10**

The positive electrode 10 for a rechargeable lithium battery may include a current collector COL1 and a positive electrode active material layer AML1 on the current collector COL1. The positive electrode active material layer AML1 may include a positive electrode active material and may further include a binder and/or a conductive (e.g., electrically conductive) material.

An amount of the positive electrode active material may be 90 wt% to 99.5 wt% relative to 100 wt% (e.g., based on 100 wt% of a total amount) of the positive electrode active material layer AML1. An amount of each of the binder and the conductive (e.g., electrically conductive) material may be 0.5 wt% to 5 wt% relative to 100 wt% (e.g., based on 100 wt% of a total amount) of the positive electrode active material layer AML1.

The binder may act or serve to improve or enhance attachment of positive electrode active material particles to each other and also to improve or enhance attachment of the positive electrode active material to the current collector COL1. The binder may include, for example, polyvinyl alcohol, carboxymethyl cellulose, hydroxypropyl cellulose, diacetyl cellulose, polyvinylchloride, carboxylated polyvinylchloride, polyvinylfluoride, an ethylene oxide-containing polymer, polyvinylpyrrolidone, polyurethane, polytetrafluoroethylene, polyvinylidene fluoride, polyethylene, polypropylene, a styrene-butadiene rubber, a (meth)acrylated styrene-butadiene rubber, an epoxy resin, a (meth)acrylic resin, a polyester resin, and/or nylon, but embodiments of the present disclosure are not limited thereto.

The conductive (e.g., electrically conductive) material may be used to provide an electrode with conductivity (e.g., electrical conductivity), and any suitable conductive (e.g., electrically conductive) material that does not cause a chemical change (e.g., undesirable chemical change) in a rechargeable lithium battery may be used as the conductive (e.g., electrically conductive) material. The conductive (e.g., electrically conductive) material may include, for example, a carbon-based material, such as natural graphite, artificial graphite, carbon black, acetylene black, Ketjen black, carbon fiber, carbon nano-fiber, and carbon nano-tube; a metal powder and/or a metal fiber containing one or more selected from among copper, nickel, aluminum, and silver; a conductive (e.g., electrically conductive) polymer, such as polyphenylene and a polyphenylene derivative; and/or a (e.g., any suitable) mixture thereof.

Aluminum (Al) may be used as the current collector COL1, but embodiments of the present disclosure are not limited thereto.

**Positive Electrode Active Material**

The positive electrode active material in the positive electrode active material layer AML1 may include a compound (e.g., a lithiated intercalation compound) that may reversibly intercalate and deintercalate lithium. For example, the positive electrode active material may include at least one kind (or type) of a composite oxide including lithium and metal that is selected from among cobalt, manganese, nickel, and/or a (e.g., any suitable) combination thereof.

The composite oxide may include a lithium transition metal composite oxide, for example, a lithium-nickel-based oxide, a lithium-cobalt-based oxide, a lithium-manganese-based oxide, lithium-iron-phosphate-based compounds, a cobalt-free nickel-manganese-based oxide, and/or a (e.g., any suitable) combination thereof.

For example, the positive electrode active material may include a compound expressed by one of chemical formulae. $Li_aA_{1-b}X_bO_{2-c}D_c$ (where $0.90 \leq a \leq 1.8$, $0 \leq b \leq 0.5$, and $0 \leq c \leq 0.05$); $Li_aMn_{2-b}X_bO_{4-c}D_c$ (where $0.90 \leq a \leq 1.8$, $0 \leq b \leq 0.5$, and $0 \leq c \leq 0.05$); $Li_aNi_{1-b-c}Co_bX_cO_{2-\alpha}D_\alpha$ (where $0.90 \leq a \leq 1.8$, $0 \leq b \leq 0.5$, $0 \leq c \leq 0.5$, and $0 < \alpha < 2$); $Li_aNi_{1-b-c}Mn_bX_cO_{2-\alpha}D_\alpha$ (where $0.90 \leq a \leq 1.8$, $0 \leq b \leq 0.5$, $0 \leq c \leq 0.5$, and $0 < \alpha < 2$); $Li_aNi_bCo_cL^1_dG_eO_2$(where $0.90 \leq a \leq 1.8$, $0 \leq b \leq 0.9$, $0 \leq c \leq 0.5$, $0 \leq d \leq 0.5$, and $0 \leq e \leq 0.1$); $Li_aNiG_bO_2$ (where $0.90 \leq a \leq 1.8$ and $0.001 \leq b \leq 0.1$); $Li_aCoG_bO_2$ (where $0.90 \leq a \leq 1.8$ and $0.001 \leq b \leq 0.1$); $Li_aMn_{1-b}G_bO_2$ (where $0.90 \leq a \leq 1.8$ and $0.001 \leq b \leq 0.1$); $Li_aMn_2G_bO_4$ (where $0.90 \leq a \leq 1.8$ and $0.001 \leq b \leq 0.1$); $Li_aMn_{1-g}G_gPO_4$ (where $0.90 \leq a \leq 1.8$ and $0 \leq g \leq 0.5$); $Li_{(3-f)}Fe_2(PO_4)_3$ (where $0 \leq f \leq 2$); and $Li_aFePO_4$ (where $0.90 \leq a \leq 1.8$).

In the foregoing chemical formulae, A may be nickel (Ni), cobalt (Co), manganese (Mn), and/or a (e.g., any suitable) combination thereof, X may be aluminum (Al), Ni, Co, Mn, chromium (Cr), iron (Fe), magnesium (Mg), strontium (Sr), vanadium (V), a rare-earth element, and/or a (e.g., any suitable) combination thereof, D may be oxygen (O), fluorine (F), sulfur (S), phosphorus (P), and/or a (e.g., any suitable) combination thereof, G may be Al, Cr, Mn, Fe, Mg, lanthanum (La), cerium (Ce), Sr, V, and/or a (e.g., any suitable) combination thereof, and $L^1$ may be Mn, Al, and/or a (e.g., any suitable) combination thereof.

For example, the positive electrode active material may be a high-nickel-based positive electrode active material having a nickel amount of equal to or greater than 80 mol%, equal to or greater than 85 mol%, equal to or greater than 90 mol%, equal to or greater than 91 mol%, or equal to or greater than 94 mol% and equal to or less than 99 mol% relative to (e.g., based on) 100 mol% of metal devoid of lithium in the lithium transition metal composite oxide. The high-nickel-based positive electrode active material may achieve or provide high capacity (e.g., electrical capacity) and thus may be applied to a high-capacity (e.g., high electrical capacity) and high-density rechargeable lithium battery.

## Negative Electrode 20

The negative electrode 20 for a rechargeable lithium battery may include a current collector COL2 and a negative electrode active material layer AML2 on the current collector COL2. The negative electrode active material layer AML2 may include a negative electrode active material and may further include a binder and/or a conductive (e.g., electrically conductive) material.

For example, the negative electrode active material layer AML2 may include a negative electrode active material of 90 wt% to 99 wt%, a binder of 0.5 wt% to 5 wt%, and a conductive (e.g., electrically conductive) material of 0 wt% to 5 wt%.

The binder may act or serve to improve or enhance attachment of negative electrode active material particles to each other and also to improve or enhance attachment of the negative electrode active material to the current collector COL2. The binder may include a non-aqueous (e.g., water-insoluble) binder, an aqueous (e.g., water-soluble) binder, a dry binder, and/or a (e.g., any suitable) combination thereof.

The non-aqueous (e.g., water-insoluble) binder may include polyvinyl chloride, carboxylated polyvinyl chloride, polyvinyl fluoride, an ethylene propylene copolymer, polystyrene, polyurethane, polytetrafluoroethylene, polyvinylidene fluoride, polyethylene, polypropylene, polyamide imide, polyimide, and/or a (e.g., any suitable) combination thereof.

The aqueous (e.g., water-soluble) binder may include a styrene-butadiene rubber, a (meth)acrylated styrene-butadiene rubber, a (meth)acrylonitrile-butadiene rubber, a (meth)acrylic rubber, a butyl rubber, a fluoro elastomer, polyethylene oxide, polyvinyl pyrrolidone, polyepichlorohydrin, polyphosphazene, poly(meth)acrylonitrile, an ethylene propylene diene copolymer, polyvinyl pyridine, chlorosulfonated polyethylene, latex, a polyester resin, a (meth)acrylic resin, a phenolic resin, an epoxy resin, polyvinyl alcohol, and/or a (e.g., any suitable) combination thereof.

If (e.g., when) an aqueous (e.g., water-soluble) binder is used as the negative electrode binder, a cellulose-based compound capable of providing or increasing viscosity may further be included. The cellulose-based compound may include one or more selected from among carboxymethyl cellulose, hydroxypropyl methyl cellulose, methyl cellulose, and alkali metal salts thereof. The alkali metal may include sodium (Na), potassium (K), and/or lithium (Li).

The dry binder may include a fibrillizable polymer material, for example, polytetrafluoroethylene, polyvinylidene fluoride, a polyvinylidene fluoridehexafluoropropylene copolymer, polyethylene oxide, and/or a (e.g., any suitable) combination thereof.

The conductive (e.g., electrically conductive) material (e.g., electron conductor) may be used to provide an electrode with conductivity (e.g., electrical conductivity), and any suitable conductive (e.g., electrically conductive) material that does not cause a chemical change (e.g., undesirable chemical change) in a rechargeable lithium battery may be used as the conductive (e.g., electrically conductive) material. For example, the conductive (e.g., electrically conductive) material may include a carbon-based material, such as natural graphite, artificial graphite, carbon black, acetylene black, Ketjen black, carbon fiber, carbon nano-fiber, and carbon nano-tube; a metal powder and/or a metal fiber including one or more selected from among copper, nickel, aluminum, and silver; a conductive (e.g., electrically conductive) polymer, such as polyphenylene and a polyphenylene derivative; and/or a (e.g., any suitable) mixture thereof.

The current collector COL2 may include a copper foil, a nickel foil, a stainless-steel foil, a titanium foil, a nickel foam, a copper foam, a polymer substrate coated with a conductive (e.g., electrically conductive) metal, and/or a (e.g., any suitable) combination thereof.

## Negative Electrode Active Material

The negative electrode active material in the negative electrode active material layer AML2 may include a material that may reversibly intercalate and deintercalate lithium ions, lithium metal, a lithium metal alloy, a material that may dope and de-dope lithium, and/or transition metal oxide.

The material that may reversibly intercalate and deintercalate lithium ions may include a carbon-based negative electrode active material, for example, crystalline carbon, amorphous (e.g., non-crystalline) carbon, and/or a (e.g., any suitable) combination thereof. For example, the crystalline carbon may include graphite, such as non-shaped (e.g., substantially non-shaped), sheet-shaped (e.g., substantially sheet-shaped), flake-shaped (e.g., substantially flake-shaped), sphere-shaped (e.g., substantially sphere-shaped), or fiber-shaped (e.g., substantially fiber-shaped) natural graphite and/or artificial graphite, and the amorphous (e.g., non-crystalline) carbon may include soft carbon, hard carbon, mesophase pitch carbon, and/or calcined coke.

The lithium metal alloy may include an alloy of lithium and metal that is selected from among Na, K, Rb, Cs, Fr, Be, Mg, Ca, Sr, Si, Sb, Pb, In, Zn, Ba, Ra, Ge, Al, and Sn.

The material that may dope and de-dope lithium may include a Si-based negative electrode active material and/or a Sn-based negative electrode active material. The Si-based negative electrode active material may include silicon, silicon-carbon composite, $SiO_x$ (where $0 < x \leq 2$), Si-Q alloy (where Q may be alkali metal, alkaline earth metal, Group 13 element, Group 14 element (except for Si), Group 15 element, Group 16 element, transition metal, a rare-earth element,

and/or a (e.g., any suitable) combination thereof), and/or a (e.g., any suitable) combination thereof. The Sn-based negative electrode active material may include Sn, $SnO_x$ (where $0 < x \leq 2$; e.g., $SnO_2$), a Sn-based alloy, a (e.g., any suitable) combination thereof.

The silicon-carbon composite may be a composite of silicon and amorphous (e.g., non-crystalline) carbon. According to one or more embodiments, the silicon-carbon composite may have a structure in which the amorphous (e.g., non-crystalline) carbon is coated on a surface of the silicon particle. For example, the silicon-carbon composite may include a secondary particle (core) in which primary silicon particles are assembled, and an amorphous (e.g., non-crystalline) carbon coating layer (shell) on a surface of the secondary particle. The amorphous (e.g., non-crystalline) carbon may also be between the primary silicon particles, and for example, the primary silicon particles may be coated with the amorphous (e.g., non-crystalline) carbon. The secondary particles may be present dispersed in an amorphous (e.g., non-crystalline) carbon matrix.

The silicon-carbon composite may further include crystalline carbon. For example, the silicon-carbon composite may include a core including crystalline carbon and silicon particles and may also include an amorphous (e.g., non-crystalline) carbon coating layer on a surface of the core.

The Si-based negative electrode active material and/or the Sn-based negative electrode active material may be used in combination with a carbon-based negative electrode active material.

**Separator 30**

Based on type (or kind) of the rechargeable lithium battery, the separator 30 may be between positive electrode 10 and the negative electrode 20. The separator 30 may include one or more selected from among polyethylene, polypropylene, and polyvinylidene fluoride, and may have a multi-layered separator thereof, such as a polyethylene/-polypropylene bi-layered separator, a polyethylene/polypropylene/polyethylene tri-layered separator, and/or a polypropylene/polyethylene/polypropylene tri-layered separator.

The separator 30 may include a porous substrate and a coating layer on a side or surface (e.g., one surface or both surfaces (e.g., two opposite (opposite facing) surfaces)) of the porous substrate, which coating layer includes an organic material, an inorganic material, and/or a (e.g., any suitable) combination thereof.

The porous substrate may be a polymer layer including one selected from among polyolefin, such as polyethylene and polypropylene, polyester, such as polyethylene terephthalate and polybutylene terephthalate, polyacetal, polyamide, polyimide, polycarbonate, polyetherketone, polyaryletherketone, polyetherimide, polyamideimide, polybenzimidazole, polyethersulfone, polyphenyleneoxide, a cyclic olefin copolymer, polyphenylenesulphide, polyethylene naphthalate, glass fiber, and polytetrafluoroethylene (Teflon™), or may be a copolymer or (e.g., any suitable) mixture including two or more of the materials.

The organic material may include a polyvinylidenefluoride-based copolymer and/or a (meth)acrylic copolymer.

The inorganic material may include an inorganic particle selected from among $Al_2O_3$, $SiO_2$, $TiO_2$, $SnO_2$, $CeO_2$, MgO, NiO, CaO, GaO, ZnO, $ZrO_2$, $Y_2O_3$, $SrTiO_3$, $BaTiO_3$, $Mg(OH)_2$, Boehmite, and/or a (e.g., any suitable) combination thereof, but embodiments of the present disclosure are not limited thereto.

The organic material and the inorganic material may be present mixed in one coating layer or may be present as a stack of a coating layer including the organic material and a coating layer including an inorganic material.

**Electrolyte ELL**

The electrolyte ELL for a rechargeable lithium battery may include a non-aqueous (e.g., water-insoluble) organic solvent and a lithium salt.

The non-aqueous (e.g., water-insoluble) organic solvent may act or serve as a medium to transmit ions that participate in an electrochemical reaction of the rechargeable lithium battery.

The non-aqueous (e.g., water-insoluble) organic solvent may include a carbonate-based solvent, an ester-based solvent, an ether-based solvent, a ketone-based solvent, an alcohol-based solvent, an aprotic solvent, and/or a (e.g., any suitable) combination thereof.

The carbonate-based solvent may include dimethyl carbonate (DMC), diethyl carbonate (DEC), dipropyl carbonate (DPC), methylpropyl carbonate (MPC), ethylpropyl carbonate (EPC), methylethyl carbonate (MEC), ethylene carbonate (EC), propylene carbonate (PC), and/or butylene carbonate (BC).

The ester-based solvent may include methyl acetate, ethyl acetate, n-propyl acetate, dimethyl acetate, methyl propionate, ethyl propionate, decanolide, mevalonolactone, valerolactone, caprolactone, and/or propyl propionate (PP).

The ether-based solvent may include dibutyl ether, tetraglyme, diglyme, dimethoxyethane, 2-methyltetrahydrofuran, 2,5-dimethyltetrahydrofuran, and/or tetrahydrofuran. The ketone-based solvent may include cyclohexanone. The alcohol-based solvent may include ethyl alcohol and/or isopropyl alcohol. The aprotic solvent may include nitriles, such as R-CN (where R may be a hydrocarbon group having a C2 to C20 linear, branched, or cyclic structure and may

include a double bond, an aromatic ring, and/or an ether group); amides, such as dimethylformamide; dioxolanes such as 1,3-dioxolane or 1.4-dioxolane; and/or sulfolanes.

The non-aqueous (e.g., water-insoluble) organic solvent may be used alone or in a mixture of two or more substances.

In one or more embodiments, if (e.g., when) a carbonate-based solvent is used, a cyclic carbonate and a chain carbonate may be mixed and used, and the cyclic carbonate and the chain carbonate may be mixed in a volume ratio of 1:1 to 1:9.

The lithium salt may be a material that is dissolved in the non-aqueous (e.g., water-insoluble) organic solvent to act or serve as a supply source of lithium ions in a rechargeable lithium battery and plays a role in enabling a basic operation of a rechargeable lithium battery and in promoting or enhancing the movement of lithium ions between the positive electrode and the negative electrode. The lithium salt may include, for example, at least one selected from among $LiPF_6$, $LiBF_4$, $LiSbF_6$, $LiAsF_6$, $LiClO_4$, $LiAlO_2$, $LiAlCl_4$, $LiPO_2F_2$, LiCl, LiI, $LiN(SO_3C_2F_5)_2$, $Li(FSO_2)_2N$ (lithium bis(fluorosulfonyl) imide, LiFSI), $LiC_4F_9SO_3$, $LiN(C_xF_{2x+1}SO_2)(C_yF_{2y+1}SO_2)$ (where x and y may be integers of 1 to 20), lithium trifluoromethane sulfonate, lithium tetrafluoroethanesulfonate, lithium difluoro(oxalato)borate (LiDFOB), lithium difluorobis(oxalato)phosphate (LiDFBOP), and lithium bis(oxalato)borate (LiBOB).

The following will describe in more detail an electrolyte of a battery cell according to one or more embodiments of the present disclosure.

An electrolyte according to one or more embodiments may include a non-aqueous (e.g., water-insoluble) organic solvent, a lithium salt, and an additive.

The electrolyte may be prepared by a mixing process in which the lithium salt is dissolved in the non-aqueous (e.g., water-insoluble) organic solvent and the additive is added to mix. The electrolyte mixing process is generally available or generally used in electrolyte fabrication field, and a person skilled in the art will be able to appropriately or suitably select and use.

The electrolyte according to one or more embodiments of the present disclosure may have relatively high ion conductivity (e.g., is an ion conductor). The non-aqueous (e.g., water-insoluble) organic solvent, the lithium salt, and the additive may be adjusted to have an optimum composition to prepare the electrolyte whose conductivity (e.g., ion conductivity) of lithium ions is relatively high. In one or more embodiments, the ion conductivity of the electrolyte may range from 7.2 mS/cm to 7.7 mS/cm.

In one or more embodiments, the non-aqueous (e.g., water-insoluble) organic solvent may include one or more selected from among a carbonate-based solvent and a propionate-based solvent.

In one or more embodiments, the non-aqueous (e.g., water-insoluble) organic solvent may include ethylene carbonate (EC) and ethyl propionate (EP).

A volume ratio of the ethylene carbonate (EC) to the non-aqueous (e.g., water-insoluble) organic solvent may range from 20 vol% to 50 vol%. The ethylene carbonate (EC) may dissociate a lithium salt in the electrolyte to act or serve to supplement a lithium ion. For example, the ethylene carbonate (EC) may dissociate a $LiPF_6$ lithium salt into $Li^+$ and $PF_6^-$. The dissociated lithium ion may act or serve as a lithium ion source in a rechargeable lithium battery, and thus the rechargeable lithium battery may have increased or enhanced ion conductivity. As the ethylene carbonate (EC) is a highly viscous organic solvent, an excess over the foregoing volume range may lead to an increase in the side reactions (e.g., undesirable side reactions).

A volume ratio of the ethyl propionate (EP) to the non-aqueous (e.g., water-insoluble) organic solvent may range from 50 vol% to 80 vol%. The ethyl propionate (EP) may act or serve to improve or enhance impregnation properties and increase electrical conductivity. As the ethylene carbonate (EC) has a relatively high melting point, the use in an excessive amount may reduce the ion conductivity of the electrolyte at low temperatures. A set or predetermined volume of the ethyl propionate (EP), having excellent or suitable impregnation properties and relatively high ion conductivity, may be mixed to mitigate demerits of the ethylene carbonate (EC) and to allow the electrolyte to maintain its high ion conductivity even at low temperatures. The low temperature may indicate a temperature of equal to or less than 40 °C, equal to or less than 35 °C, equal to or less than 30 °C, or equal to or less than 15 °C.

In one or more embodiments, the non-aqueous (e.g., water-insoluble) organic solvent may include ethylene carbonate (EC), propylene carbonate (PC), and ethyl propionate (EP).

In one or more embodiments, the non-aqueous (e.g., water-insoluble) organic solvent may include ethylene carbonate (EC), propylene carbonate (PC), ethyl propionate (EP), and propyl propionate (PP).

In one or more embodiments, the lithium salt may include at least one selected from among $LiPF_6$, $LiBF_4$, $LiSbF_6$, $LiAsF_6$, $LiClO_4$, $LiAlO_2$, $LiAlCl_4$, $LiPO_2F_2$, LiCl, LiI, $LiN(SO_3C_2F_5)_2$, $Li(FSO_2)_2N$ (lithium bis(fluorosulfonyl)imide, LiFSI), $LiC_4F_9SO_3$, $LiN(C_xF_{2x+1}SO_2)(C_yF_{2y+1}SO_2)$ (where x and y may be integers of 1 to 20), lithium trifluoromethane sulfonate, lithium tetrafluoroethanesulfonate, lithium difluoro(oxalato)borate (LiDFOB), lithium difluorobis(oxalato)phosphate (LiDFBOP), and lithium bis(oxalato)borate (LiBOB).

In one or more embodiments, the lithium salt may include $LiPF_6$.

The lithium salt may have a concentration of 0.1 *M* to 2.0 *M*. For example, the lithium salt may have a

concentration of equal to or greater than 1.0 *M* or equal to or greater than 1.4 *M*. The lithium salt may have a concentration of equal to or less than 2.0 *M*, equal to or less than 1.8 *M*, or equal to or less than 1.6 *M*. If (e.g., when) the concentration of the lithium salt falls within the foregoing ranges, the electrolyte may maintain an appropriate or suitable viscosity and have excellent or suitable ion conductivity.

In one or more embodiments, the additive according to the present disclosure may be a compound represented by Chemical Formula 1.

Chemical Formula 1

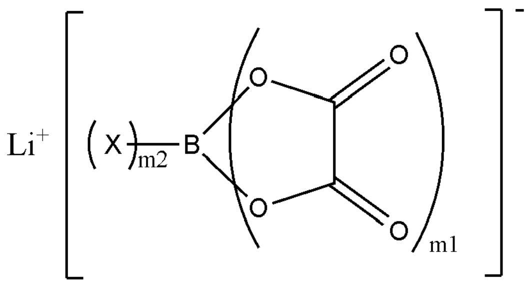

In Chemical Formula 1,

X may be a halogen atom (e.g., F, Cl, Br, or I) or a C1 to C10 haloalkyl group.
m1 may be 1 or 2.
m2 may be 2 if (e.g., when) m1 is 1.
m2 may be 0 if (e.g., when) m1 is 2.

In one or more embodiments, the additive may include lithium difluoro(oxalato)borate (LiDFOB). The additive may have a function to form a passivation layer on the negative electrode and may thus reduce a side reaction (or may reduce a degree or occurrence of a side reaction) occurring at an interface between the negative electrode and the electrolyte.

In one or more embodiments, the additive may be lithium bis(oxalato)borate (LiBOB).

The additive may be in an amount of 1 part by weight to 10 parts by weight relative to (e.g., based on) 100 parts by weight of the electrolyte. In one or more embodiments, the amount of the additive may range from 1 part by weight to 5 parts by weight. In one or more embodiments, the amount of the additive may range from 1 part by weight to 3 parts by weight. If (e.g., when) the additive is in an amount greater than the foregoing ranges, the additive may induce an excessive resistance, and thus the electrolyte may have reduced ion conductivity.

**Battery Cell**

A battery cell according to one or more embodiments of the present disclosure will be described in more detail with reference to FIGS. 3-9. The battery cell according to one or more embodiments of the present disclosure may include a wound electrode assembly and an electrolyte. The wound electrode assembly may include a positive electrode, a negative electrode, and a separator between the positive electrode and the negative electrode.

Referring to FIGS. 3-5, the wound electrode assembly may be provided in such a way that a positive electrode 10, a separator 30, and a negative electrode 20 may be stacked and wound around a winding axis, and then pressed in a normal (e.g., substantially perpendicular) direction to a relatively flat plane (e.g., in a direction reverse to an axis D1 as illustrated in FIG. 5).

FIG. 3 is a simplified view illustrating an unwound electrode assembly according to one or more embodiments of the present disclosure. The stacking sequence of the positive electrode 10 and the negative electrode 20 may be interchangeable. For example, the negative electrode 20, the separator 30, and the positive electrode 10 may be stacked in the foregoing sequence.

FIG. 4 is a detailed view illustrating an unwound electrode assembly according to one or more embodiments of the present disclosure. Referring to FIG. 4, the negative electrode 20 may include a negative electrode current collector COL2, a negative electrode active material layer AML2, and a negative electrode tab TAB2. The negative electrode active material layer AML2 may be on at least one surface of the negative electrode current collector COL2. For example, the negative electrode active material layer AML2 may be on one surface or both surfaces (e.g., two opposite (opposite facing) surfaces) of the negative electrode current collector COL2. The negative electrode tab TAB2 may be on an uncoated

portion of the negative electrode current collector COL2. The uncoated portion may indicate a section where the negative electrode active material layer AML2 is not on the negative electrode current collector COL2. One or more negative electrode tabs TAB2 may be formed or provided. For example, two negative electrode tabs TAB2 may be provided.

The positive electrode 10 may include a positive electrode current collector COL1, a positive electrode active material layer AML1, and a positive electrode tab TAB1. The positive electrode active material layer AML1 may be on at least one surface of the positive electrode current collector COL1. For example, the positive electrode active material layer AML1 may be on a side or surface (e.g., one surface or both surfaces (e.g., two opposite (opposite facing) surfaces)) of the positive electrode current collector COL1. The positive electrode tab TAB1 may be on an uncoated portion of the positive electrode current collector COL1. The uncoated portion may indicate a section where the positive electrode active material layer AML1 is not on the positive electrode current collector COL1. One or more positive electrode tabs TAB1 may be formed or provided. For example, two positive electrode tabs TAB1 may be provided.

The separator 30 may be between the positive electrode 10 and the negative electrode 20. If necessary or desired, the separator 30 may be additionally stacked at a bottom end. For example, the separator 30, the positive electrode 10, the separator 30, and the negative electrode 20 may be stacked in the foregoing sequence.

In FIG. 4, the negative electrode current collector COL2 may be longer widthwise (e.g., in a direction parallel (e.g., substantially parallel) to an axis D2) than the positive electrode current collector COL1. In one or more embodiments, the negative electrode active material layer AML2 may be longer widthwise than the positive electrode active material layer AML1. In one or more embodiments, the separator 30, the positive electrode current collector COL1, and the negative electrode current collector COL2 may have different widthwise directions from each other. For example, to prevent or reduce the formation of lithium dendrites, the negative electrode active material layer AML2 may be longer than the positive electrode active material layer AML1.

FIG. 5 is a simplified view illustrating a wound electrode assembly according to one or more embodiments of the present disclosure. Referring to FIG. 5, a wound electrode assembly may include a flat section FLT and a pair of curved sections RND. Compared to the flat section FLT, the pair of curved sections RND may have relatively rounded (e.g., substantially rounded) shapes at outer surfaces thereof. The pair of curved sections RND may be correspondingly positioned or provided on two opposite (e.g., opposite facing) sides of the wound electrode assembly (see RND1 and RND2). The flat section FLT may be between the pair of curved sections RND.

FIG. 6 is a cross-sectional view taken along the line A-A' of a wound electrode assembly depicted in FIG. 5. The line A-A' may be an arbitrary straight line parallel (e.g., substantially parallel) to a widthwise direction (e.g., a direction of the axis D2) of the wound electrode assembly. The pair of curved sections RND may refer to portions of the wound electrode assembly in each of which the outer surface of the wound electrode assembly has a curvature of 1 $m^{-1}$ to 1,000 $m^{-1}$. The flat section FLT may refer to a portion of the wound electrode assembly other than the pair of curved sections RND in the wound electrode assembly.

In the present specification, the term "curvature" refers to a geometric parameter used to distinguish the curved part (RND) and the flat part (FLT) of the cross-section of a jelly-roll type electrode assembly, as illustrated in FIG. 6. The curved part (RND) corresponds to the rounded portions located at both ends of the elliptical outer circumference of the wound electrode assembly, and includes regions where the curvature of the outer circumferential surface falls within a range of approximately 1 $m^{-1}$ to 1000 $m^{-1}$.

The curvature is defined based on the radius (R) of the outer surface, according to the relationship $\kappa = 1/R$. In this specification, regions having a curvature within the above range are regarded as the curved part (RND), while the remaining regions are defined as the flat part (FLT).

The curvature is calculated by measuring the curved profile of the outer surface along the cross-section (in the A-A' direction) of the electrode assembly in its wound and compressed state. The radius of curvature (R) may be measured using, for example, a non-contact laser profilometer or an optical measuring device (e.g., a 3D shape measuring instrument), and the measured value is used to calculate the curvature $\kappa = 1/R$.

Referring to FIG. 7, a ratio of a width $W_{RND}$ of the pair of curved sections RND to a width $W_{ASB}$ of the wound electrode assembly may range from 5% to 50%. The width $W_{RND}$ of the pair of curved sections RND may be a sum ($W_{RND1}$ +$W_{RND2}$) of widths of the curved sections RND on the two opposite (e.g., opposite facing) sides.

An increase in energy density may require an increase in proportion of the pair of curved sections RND in the wound electrode assembly. In the battery cell according to one or more embodiments of the present disclosure, a ratio of an area of the negative electrode active material layer in the pair of curved sections to a total area of the negative electrode active material layer may range from 18% to 50%. In one or more embodiments, the ratio may range from 19% to 40%. In one or more embodiments, the ratio may range from 19% to 30%.

For example, the ratio of the width of the curved sections ($W_{RND}$) to the width of the wound electrode assembly ($W_{ASB}$) may range from 5% to 50%, with $W_{RND}$ being the sum of the widths of the curved sections on two opposite (e.g., opposite facing) sides. Increasing energy density may require a higher proportion of these curved sections. In the disclosed battery cell, the ratio of the area of the negative electrode active material layer in the curved sections to the total area of the negative electrode active material layer may range from 18% to 50%, with certain embodiments ranging from

19% to 40% or 19% to 30%. Here, the ratios are expressed in percentages to provide a clear, standardized measure for comparison, making it easier to understand and interpret the extent of improvements or differences. In more detail, the width ratio is calculated by dividing $W_{RND}$ by $W_{ASB}$ and multiplying by 100 to convert it to a percentage. This ratio indicates the proportion of the curved sections relative to (e.g., based on) the entire width of the electrode assembly. The area ratio is calculated by dividing the area of the negative electrode active material layer in the curved sections by the total area of the negative electrode active material layer and multiplying by 100 to convert it to a percentage. This ratio indicates the proportion of the active material layer in the curved sections compared to the total active material layer.

Referring to FIGS. 6-9, the total area of the negative electrode active material layer may be calculated according to Equation 1.

Total area of negative electrode active material layer = width $W_{AML2}$ of negative electrode active material layer × length $L_{AML2}$ of negative electrode active material layer  Equation 1

The area of the negative electrode active material layer in the pair of curved sections may be calculated according to Equation 2. A length $L_{ASB}$ of the wound electrode assembly may be substantially the same as a length $L_{AML2}$ of the negative electrode active material layer. The number of turns may refer to the number of times the negative electrode active material is wound during a winding process. For example, the number of turns may be 3 as illustrated in FIG. 6.

Equation 2

Area of negative electrode active material layer in pair of curved sections = Total area of negative electrode active material layer – Area of negative electrode active material in flat section = {width $W_{AML2}$ of negative electrode active material layer × length $L_{AML2}$ of negative electrode active material layer} – {[width $W_{FLT}$ of flat section × length $L_{ASB}$ of wound electrode assembly × number of turns] – [width $W_{UCT}$ of uncoated portion of negative electrode current collector in flat section × length $L_{ASB}$ of wound electrode assembly]}

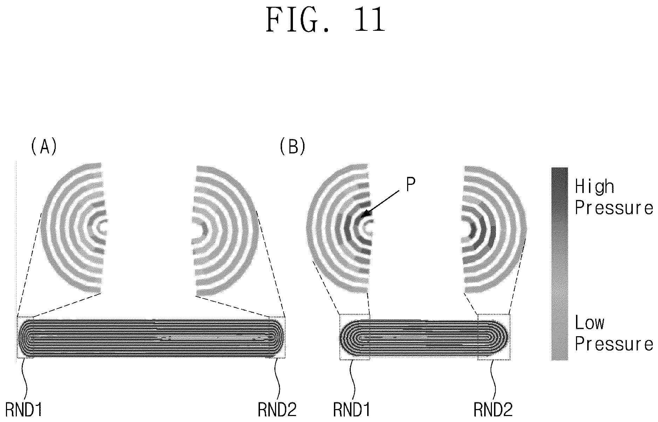

Referring to FIG. 11, an increase in proportion of the pair of curved sections may cause an increase in energy density, but a strong stress may occur in an interior of the wound electrode assembly (see P). Under this stress, as a charge/discharge of the battery may not proceed favorably and a side reaction may increase, there may be a limitation on increase in proportion of the curved section. The battery according to one or more embodiments of the present disclosure may include the electrolyte that is improved or optimized to suppress or reduce a side reaction (or a degree or occurrence of a side reaction) of the rechargeable lithium battery, and thus the side reaction (or a degree or occurrence of the side reaction) may be minimized or reduced even if (e.g., when) the battery cell has a structure in which a proportion of the curved section is large. A high energy density may therefore be achieved or provided.

The battery cell according to one or more embodiments of the present disclosure may have a high mixture density of the negative electrode active material layer AML2. In one or more embodiments, the mixture density may be 1.0 g/cc to 10 g/cc. In one or more embodiments, the mixture density may be 1.65 g/cc to 4.00 g/cc. The high mixture density may allow the rechargeable lithium battery to have a relatively high energy density.

The positive electrode active material layer AML1 may include lithium composite oxide represented by Chemical Formula 2.

Chemical Formula 2  $Li_xM^1_yM^2_zM^3_{1-y-z}O_{2-a}X_a$

In Chemical Formula 2, $0.5 \le x \le 1.8$, $0 \le a \le 0.05$, $0 < y \le 1$, $0 \le z \le 1$, and $0 < y+z \le 1$.

$M^1$, $M^2$, and $M^3$ may each independently include at least one element selected from among metals of (e.g., such as) Ni, Co, Mn, Al, boron (B), barium (Ba), calcium (Ca), Ce, Cr, Fe, molybdenum (Mo), niobium (Nb), silicon (Si), Sr, Mg, titanium (Ti), V, tungsten (W), zirconium (Zr), La, and/or a (e.g., any suitable) combination thereof.

X may include at least one element selected from among F, S, P, and chlorine (Cl).

The negative electrode active material layer AML2 may include a carbon-based negative electrode active material, a Si-based negative electrode active material, a Sn-based negative electrode active material, and/or a (e.g., any suitable) combination thereof.

The battery cell according to one or more embodiments of the present disclosure may exhibit excellent or suitable performance even at relatively high voltages. The high voltage may be equal to or greater than 3.0 V, equal to or greater than 3.5 V, equal to or greater than 4.0 V, or equal to or greater than 4.47 V.

The battery cell according to one or more embodiments of the present disclosure may be used while being accommodated in one or more differently-shaped casings. For example, an outer appearance of the casing may be cylindrical, prismatic, pouch-type (or kind), or any other suitable shapes. If (e.g., when) the battery cell is accommodated in a pouch-type (or kind) casing, it may be referred to as a pouch-type (or kind) rechargeable lithium battery. One or more structures may be added to fit the external appearance of the casing. For example, referring to FIG. 2, an electrode tab 70 may be separately added which is connected to the positive electrode tab (see TAB1 of FIG. 4) and the negative electrode tab (see TAB2 of FIG. 4).

The battery cell according to one or more embodiments of the present disclosure may be applied to automotive vehicles, mobile phones, and/or any other electrical devices, but embodiments of the present disclosure are not limited thereto.

Hereinafter, embodiments of the present disclosure will be described in more detail with reference to Embodiments and Comparatives. However, the following examples are only examples of the present disclosure, and embodiments of the present disclosure are not limited to the following examples.

## Embodiments and Comparatives

### Embodiment 1

#### (1) Preparation of Electrolyte

$LiPF_6$ was dissolved in a non-aqueous (e.g., water-insoluble) organic solvent in which ethylene carbonate (EC), propylene carbonate (PC), ethyl propionate (EP), and propyl propionate (PP) are mixed. A compound including lithium difluoro(oxalato)borate (LiDFOB) was added to prepare an electrolyte.

#### (2) Fabrication of Battery Cell

$LiCoO_2$ as a positive electrode active material, polyvinylidene fluoride as a binder, and Ketjen black as a conductive (e.g., electrically conductive) material were mixed in a weight ratio of 97:2:1, and the mixture was dispersed in N-methyl pyrrolidone to prepare a positive electrode active material slurry.

The positive electrode active material slurry was coated on an aluminum current collector of 14 μm in thickness, dried at 110 °C, and then pressed to manufacture a positive electrode.

Artificial graphite and silicon nano-particles mixed in a weight ratio of 93:7 as a negative electrode active material, a styrene-butadiene rubber (SBR) as a binder, and carboxymethyl cellulose (CMC) as a thickener were mixed in a weight ratio of 97:1:2, and the mixture was dispersed in distilled water to prepare a negative electrode active material slurry.

The negative electrode active material slurry was coated on a copper current collector of 10 μm in thickness, dried at 100 °C, and then pressed to manufacture a negative electrode. A mixture density of the negative electrode active material layer was 1.65 g/cc.

The positive electrode, the negative electrode, and a polyethylene separator of 10 μm in thickness were wound, and then pressed to manufacture a wound electrode assembly. An electrolyte was produced to fabricate a battery cell.

Table 1 lists characteristics of the wound electrode assembly and a composition of the electrolyte.

### Embodiment 2 to Embodiment 5

Embodiments 2 to 5 were prepared/performed. In each Embodiments 2 to 5, an electrolyte and a battery cell were fabricated in substantially the same method as that in Embodiment 1, except for differences in the characteristics of the wound electrode assembly and the composition of the electrolyte. Table 1 lists the characteristics of the wound electrode assembly and the composition of the electrolyte for each of Embodiments 2 to 5.

### Comparative 1 to Comparative 5

Comparatives 1 to 5 were prepared/performed. In each Comparatives 1 to 5, an electrolyte and a battery cell were fabricated in substantially the same method as that in Embodiment 1, except for differences in the characteristics of the

wound electrode assembly and the composition of the electrolyte. Table 1 lists the characteristics of the wound electrode assembly and the composition of the electrolyte for each of Comparatives 1 to 5.

**Evaluation 1: Low-Temperature Cycle-Life**

The battery cell of each of Embodiments and Comparatives was accommodated in a pouch-type (or kind) battery housing to fabricate a pouch-type (or kind) rechargeable lithium battery. The rechargeable lithium battery was charged under the conditions of 25 °C, 0.2 C, 4.47 V, and 0.02 C cut-off, and initial characteristics of the rechargeable lithium battery were measured. The charge/discharge cycle was conducted 50 times, and then characteristics of the rechargeable lithium battery were measured. The charge conditions were 15 °C, 2 C, 4.47 V, and 0.1 C cut-off. The discharge conditions were 15 °C, 1 C, and 3.0 V cut-off. A capacity retention rate was calculated according to Equation 3. A current of 1 C was applied for 10 seconds, and dR=dV/dI was used to measure a direct-current internal resistance (DCIR). The results are illustrated in Table 2.

$$\text{Capacity retention rate (\%)} = (\text{discharge capacity after 50 cycles / initial discharge capacity}) \times 100 \qquad \text{Equation 3}$$

**Evaluation 2: Side Reaction after Low-Temperature Cycle-Life**

The battery cell of each of Embodiments and Comparatives was accommodated in a pouch-type (or kind) battery housing to fabricate a pouch-type (or kind) rechargeable lithium battery. After the low-temperature cycle-life evaluation according to Evaluation 1, the rechargeable lithium battery was disassembled to determine the degree of occurrence of side reactions at the negative electrode. A case with no side reaction was rated as 0 point, and a case with a severe side reaction was rated as 5 points. It was confirmed that the rechargeable lithium batteries of Comparatives experienced side reactions and discoloration. The results are illustrated in Table 2 and FIG. 10.

Table 1

| | Characteristics of wound electrode assembly | | Composition of electrolyte | | | | | |
|---|---|---|---|---|---|---|---|---|
| | Proportion of curved sections of negative electrode (A) [%] | Mixture density of negative electrode (B) [g/cc] | $LiPF_6$ [M] | EC [vol%] | PC [vol%] | EP [vol%] | PP [vol%] | LiDFOB [part by weight] |
| Embodiment 1 | 19 | 1.65 | 1.5 | 20 | 15 | 50 | 15 | 1 |
| Embodiment 2 | 25 | 1.65 | 1.5 | 20 | 15 | 50 | 15 | 1 |
| Embodiment 3 | 19 | 1.65 | 1.5 | 30 | 5 | 50 | 15 | 1 |
| Embodiment 4 | 19 | 1.65 | 1.5 | 20 | 5 | 70 | 5 | 1 |
| Embodiment 5 | 19 | 1.65 | 1.5 | 20 | 15 | 50 | 15 | 7 |
| Comparative 1 | 17 | 1.65 | 1.3 | 10 | 15 | 10 | 65 | - |
| Comparative 2 | 19 | 1.6 | 1.3 | 10 | 15 | 10 | 65 | - |
| Comparative 3 | 19 | 1.65 | 1.3 | 10 | 15 | 10 | 65 | - |
| Comparative 4 | 19 | 1.65 | 1.5 | 20 | 5 | 10 | 65 | - |

(continued)

| | Characteristics of wound electrode assembly | | Composition of electrolyte | | | | | |
|---|---|---|---|---|---|---|---|---|
| | Proportion of curved sections of negative electrode (A) [%] | Mixture density of negative electrode (B) [g/cc] | $LiPF_6$ [M] | EC [vol%] | PC [vol%] | EP [vol%] | PP [vol%] | LiDFOB [part by weight] |
| Comparative 5 | 19 | 1.65 | 1.3 | 10 | 15 | 10 | 65 | 1 |

* A: proportion of the curved portions of the negative electrode = a ratio of an area of the negative electrode active material layer in the pair of curved sections to a total area of the negative electrode active material layer
* B: mixture density of the negative electrode = mixture density of the negative electrode active material layer

Table 2

| | Capacity retention rate [%] | The degree of occurrence of side reaction [Point] |
|---|---|---|
| Embodiment 1 | 86.3 | 0 |
| Embodiment 2 | 88.8 | 0 |
| Embodiment 3 | 88.6 | 0 |
| Embodiment 4 | 88.0 | 0 |
| Embodiment 5 | 87.3 | 0 |
| Comparative 1 | 85.1 | 0 |
| Comparative 2 | 82.5 | 2 |
| Comparative 3 | 80.0 | 5 |
| Comparative 4 | 84.5 | 3 |
| Comparative 5 | 83.0 | 5 |

Referring to Tables 1 and 2, it may be ascertained that evaluation of the low-temperature cycle-life evaluation and evaluation of the side reaction are excellent or suitable in Embodiments according to the present disclosure as compared to those in Comparatives. For example, it may be confirmed that, despite its high energy density, the battery cell according to the present disclosure exhibits excellent or suitable performance due to minimal occurrence of side reactions.

A battery cell according to one or more embodiments of the present disclosure may have a high energy density and minimal side reactions.

A rechargeable lithium battery according to one or more embodiments of the present disclosure may have a high energy density and minimal side reactions.

In summary, the battery cell described in the present disclosure demonstrates superior low-temperature cycle-life and reduced side reactions compared to the comparatives (comparative examples). Despite its high energy density, the battery cell maintains excellent performance with minimal side reactions, making it highly suitable for use. This applies to both general battery cells and rechargeable lithium batteries according to the disclosed embodiments.

A person of ordinary skill in the art, in view of the present disclosure in its entirety, would appreciate that each suitable feature of the one or more embodiments of the present disclosure may be combined or combined with each other, partially or entirely, and may be technically interlocked and operated in one or more suitable ways, and each embodiment may be implemented independently of each other or in conjunction with each other in any suitable manner unless otherwise stated or implied.

## Claims

**1.** A battery cell, comprising:

a wound electrode assembly, the wound electrode assembly comprising a positive electrode (10), a negative electrode (20), and a separator (30) between the positive electrode (10) and the negative electrode (20); and an electrolyte impregnated in the wound electrode assembly,
wherein the negative electrode (10) comprises:

a negative electrode current collector (COL2);
a negative electrode active material layer (AML2) on at least one surface of the negative electrode current collector (COL2); and
a negative electrode tab (TAB2) on an uncoated portion of the negative electrode current collector (COL2),
wherein the wound electrode assembly comprises:

a pair of curved sections (RND) on two opposite sides of the wound electrode assembly; and
a flat section (FLT) between the pair of curved sections (RND),
wherein a ratio of an area of the negative electrode active material layer (AML2) in the pair of curved sections (RND) to a total area of the negative electrode active material layer (AML2) is in a range of 18% to 50%,
wherein the electrolyte comprises a non-aqueous organic solvent, a lithium salt, and an additive,
wherein the non-aqueous organic solvent comprises ethylene carbonate and ethyl propionate,
wherein a volume ratio of the ethylene carbonate to the non-aqueous organic solvent is in a range of 20 vol% to 50 vol%,
wherein a volume ratio of the ethyl propionate to the non-aqueous organic solvent is in a range of 50 vol% to 80 vol%,
wherein the additive comprises a compound represented by Chemical Formula 1,
wherein an amount of the additive is in a range of 1 part by weight to 10 parts by weight based on 100 parts by weight of the electrolyte,

Chemical Formula 1

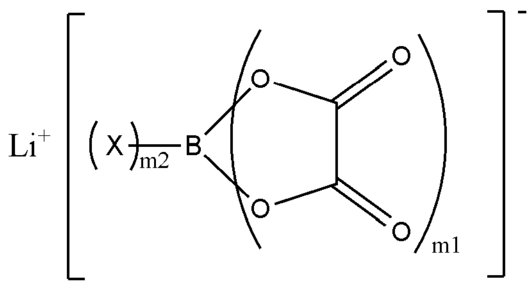

,

and
wherein, in Chemical Formula 1,
X is halogen or a C1 to C10 haloalkyl group,
m1 is 1 or 2,
m2 is 2 when m1 is 1, and
m2 is 0 when m1 is 2.

**2.** The battery cell as claimed in claim 1, wherein the negative electrode active material layer (AML2) is on two opposite surfaces of the negative electrode current collector (COL2).

**3.** The battery cell as claimed in claim 1 or 2, wherein the positive electrode (20) comprises:

a positive electrode current collector (COL1);
a positive electrode active material layer (AML1) on at least one surface of the positive electrode current collector (COL1); and
a positive electrode tab (TAB1) on an uncoated portion of the positive electrode current collector (COL1).

**4.** The battery cell as claimed in claim 3, wherein the positive electrode active material layer (AML1) is on two opposite surfaces of the positive electrode current collector (COL1).

**5.** The battery cell as claimed in any one of the preceding claims, wherein a ratio of a width of the pair of curved sections (RND) to a width of the wound electrode assembly is in a range of 5% to 50%.

**6.** The battery cell as claimed in any one of the preceding claims, wherein the pair of curved sections (RND) each independently have a curvature of 1 $m^{-1}$ to 1,000 $m^{-1}$.

**7.** The battery cell as claimed in any one of the preceding claims, wherein a mixture density of the negative electrode active material layer (AML2) is in a range of 1.65 g/cc to 4.00 g/cc.

**8.** The battery cell as claimed in any one of the preceding claims, wherein the battery cell operates at a voltage of equal to or greater than 4.47 V.

**9.** The battery cell as claimed in any one of the preceding claims, wherein an ion conductivity of the electrolyte is in a range of 7.2 mS/cm to 7.7 mS/cm.

**10.** The battery cell as claimed in any one of the preceding claims, wherein the non-aqueous organic solvent further comprises propyl propionate.

**11.** The battery cell as claimed in any one of the preceding claims, wherein the non-aqueous organic solvent further comprises propylene carbonate.

**12.** The battery cell as claimed in any one of the preceding claims, wherein a concentration of the lithium salt is in a range of 1.5 *M* to 2.0 *M.*

**13.** The battery cell as claimed in any one of the preceding claims, wherein the additive comprises lithium difluoro(oxalato) borate (LiDFOB).

**14.** The battery cell as claimed in any one of the preceding claims, wherein an amount of the additive is in a range of 1 part by weight to 5 parts by weight based on 100 parts by weight of the electrolyte.

**15.** A rechargeable lithium battery (100), comprising:

the battery cell as claimed in any one of claims 1 to 14; and
a pouch-type casing that accommodates the battery cell.

FIG. 1

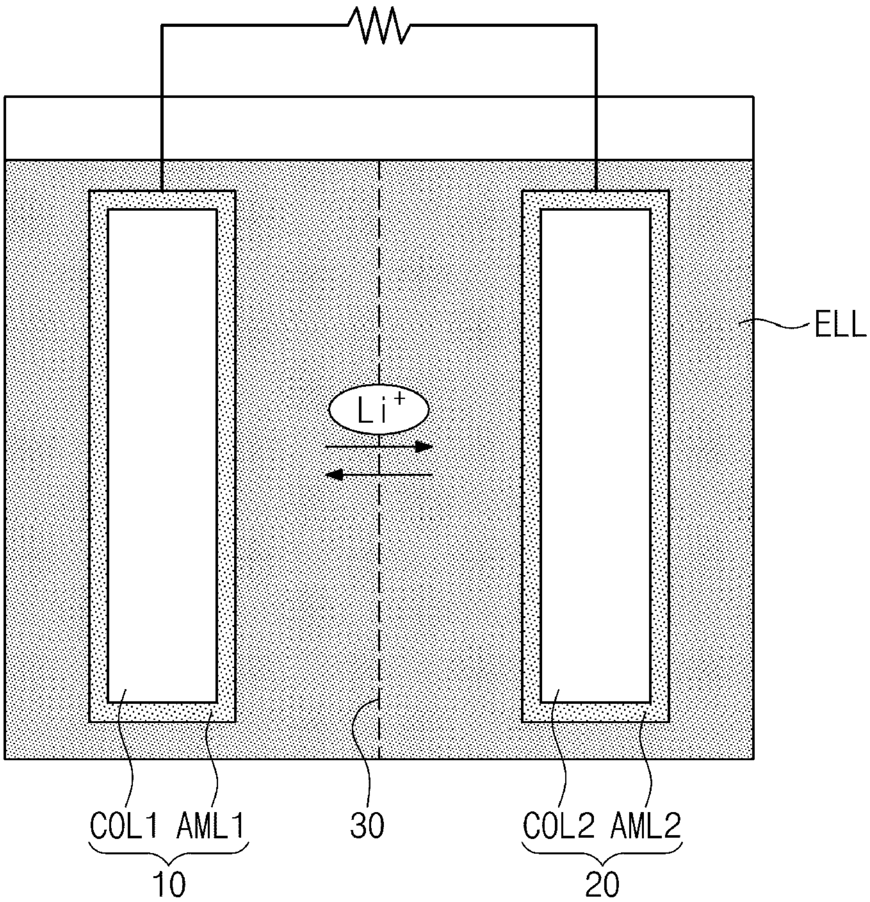

FIG. 2

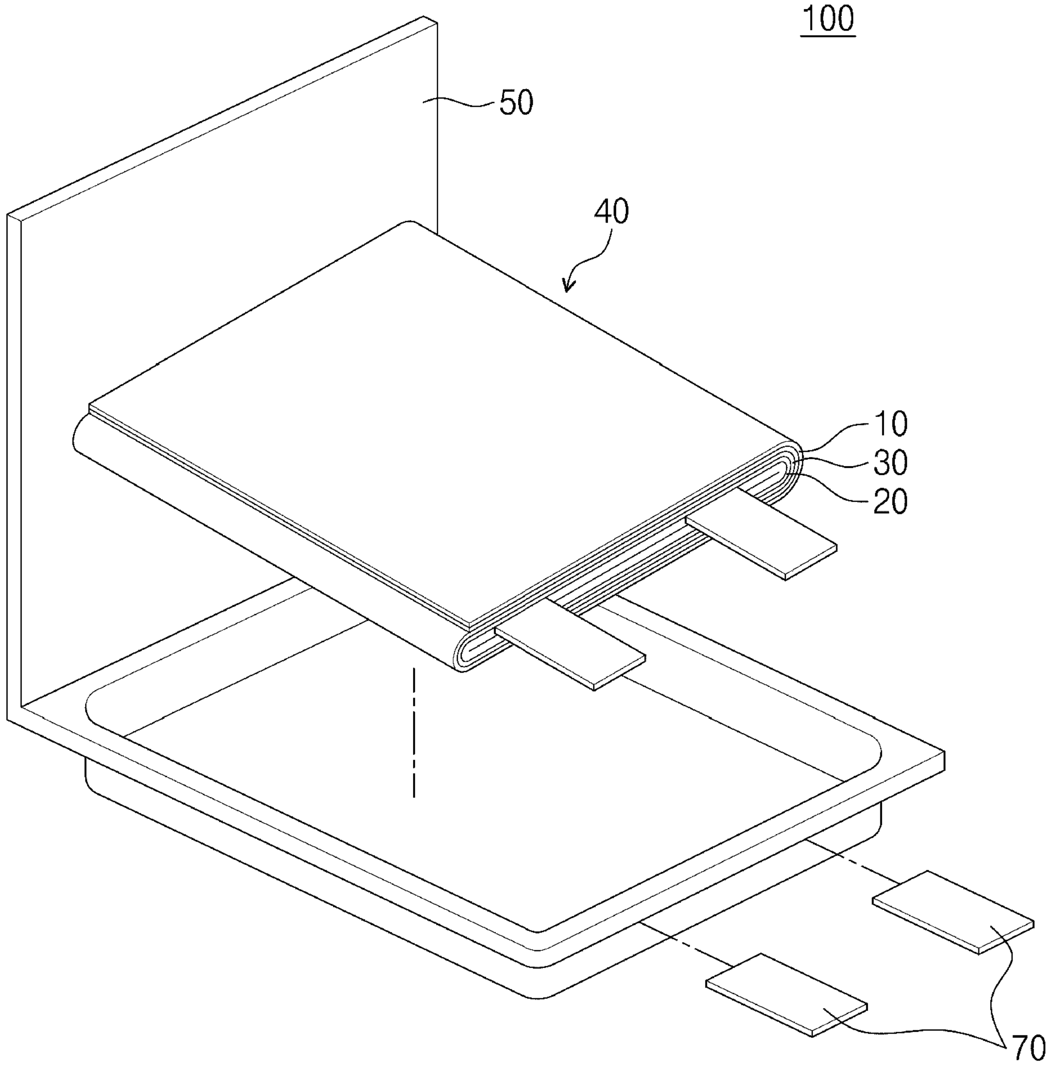

FIG. 3

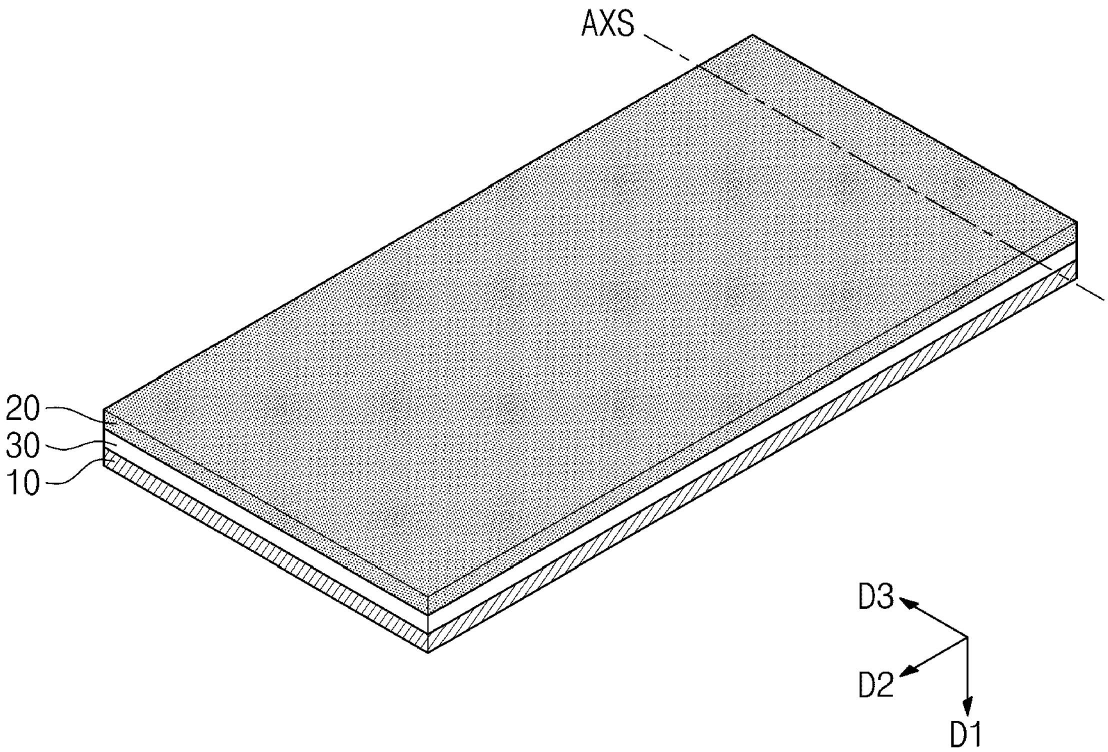

FIG. 4

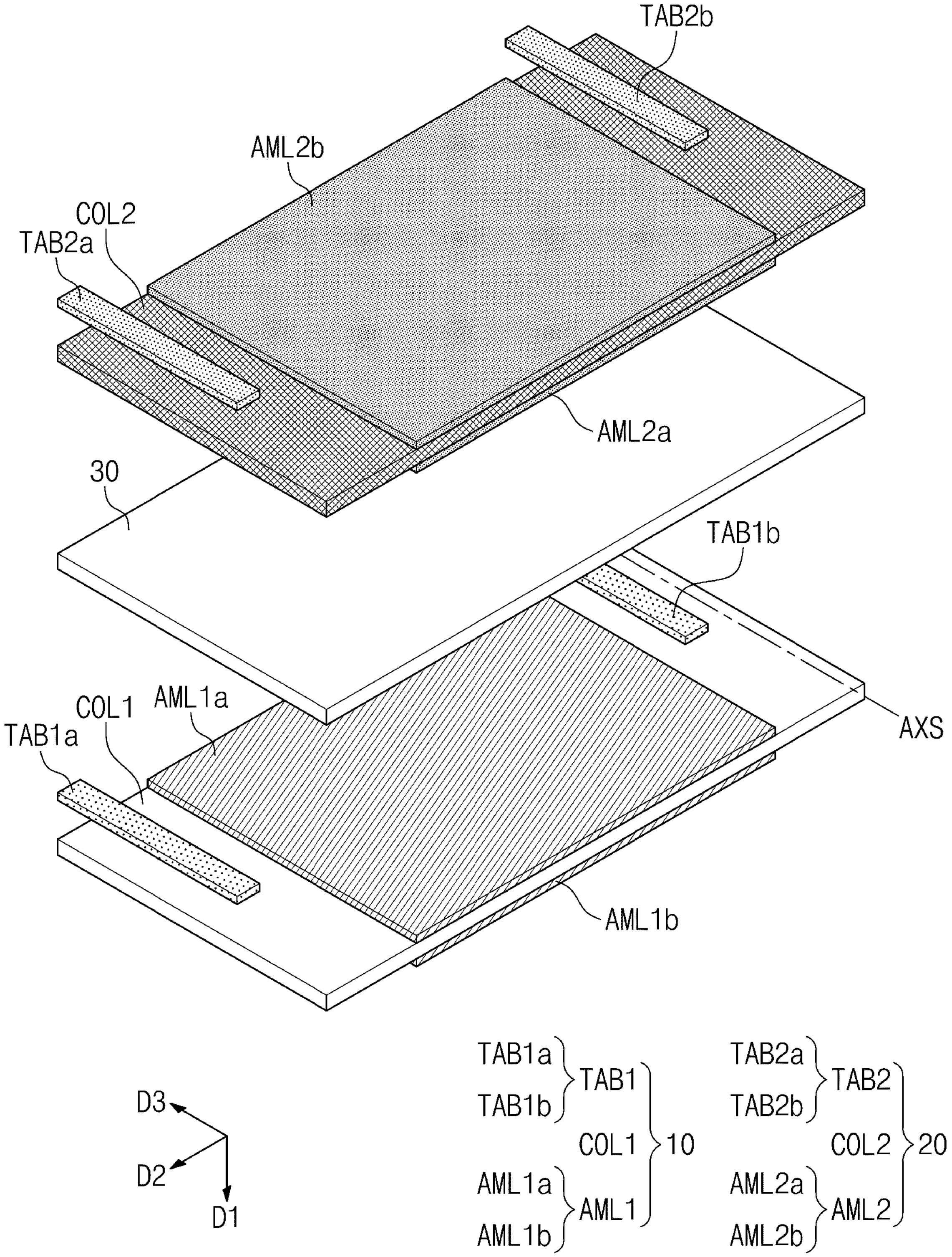
TAB2b
AML2b
COL2
TAB2a
AML2a
30
TAB1b
AXS
COL1
AML1a
TAB1a
AML1b
D3
D2
D1
TAB1a
TAB1b
TAB1
COL1
10
AML1a
AML1b
AML1
TAB2a
TAB2b
TAB2
COL2
20
AML2a
AML2b
AML2

FIG. 5

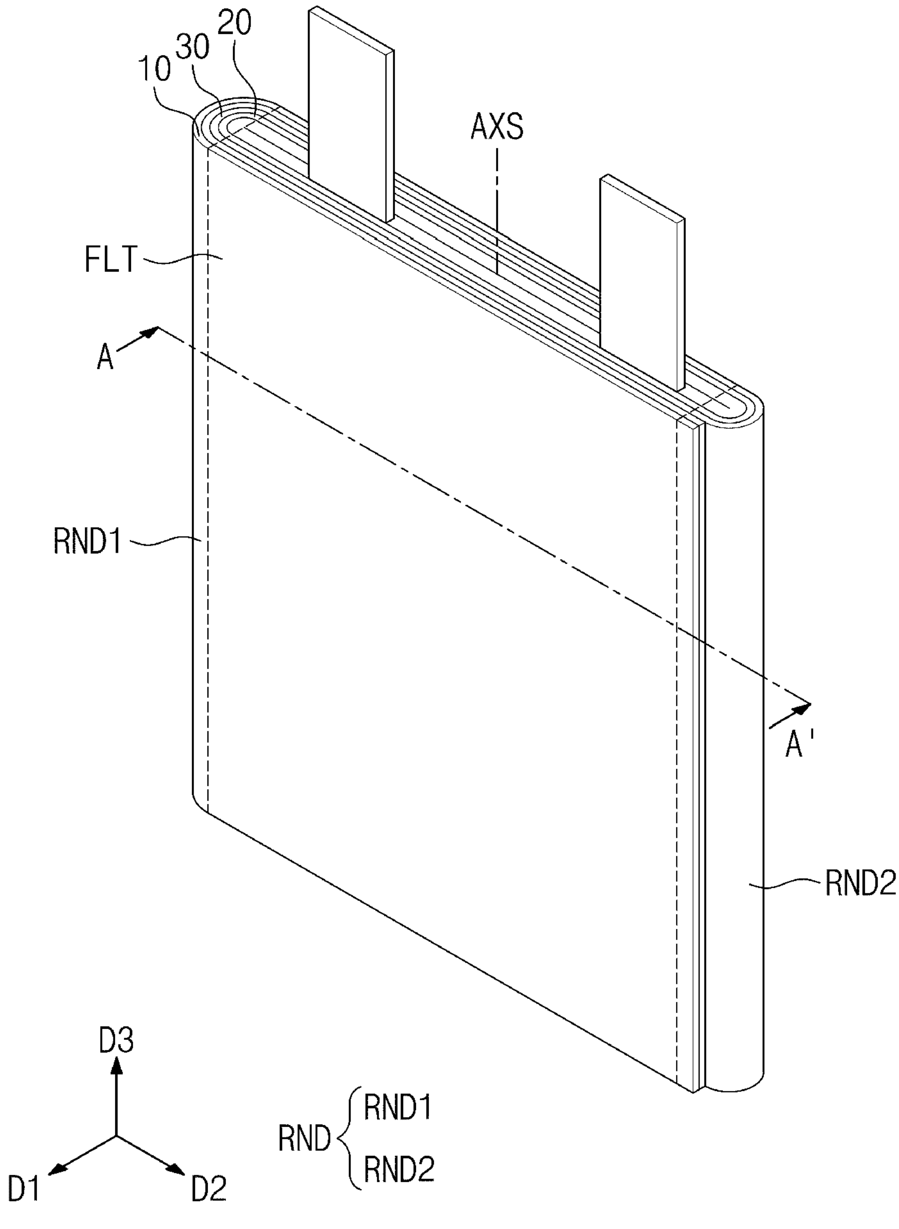

FIG. 6

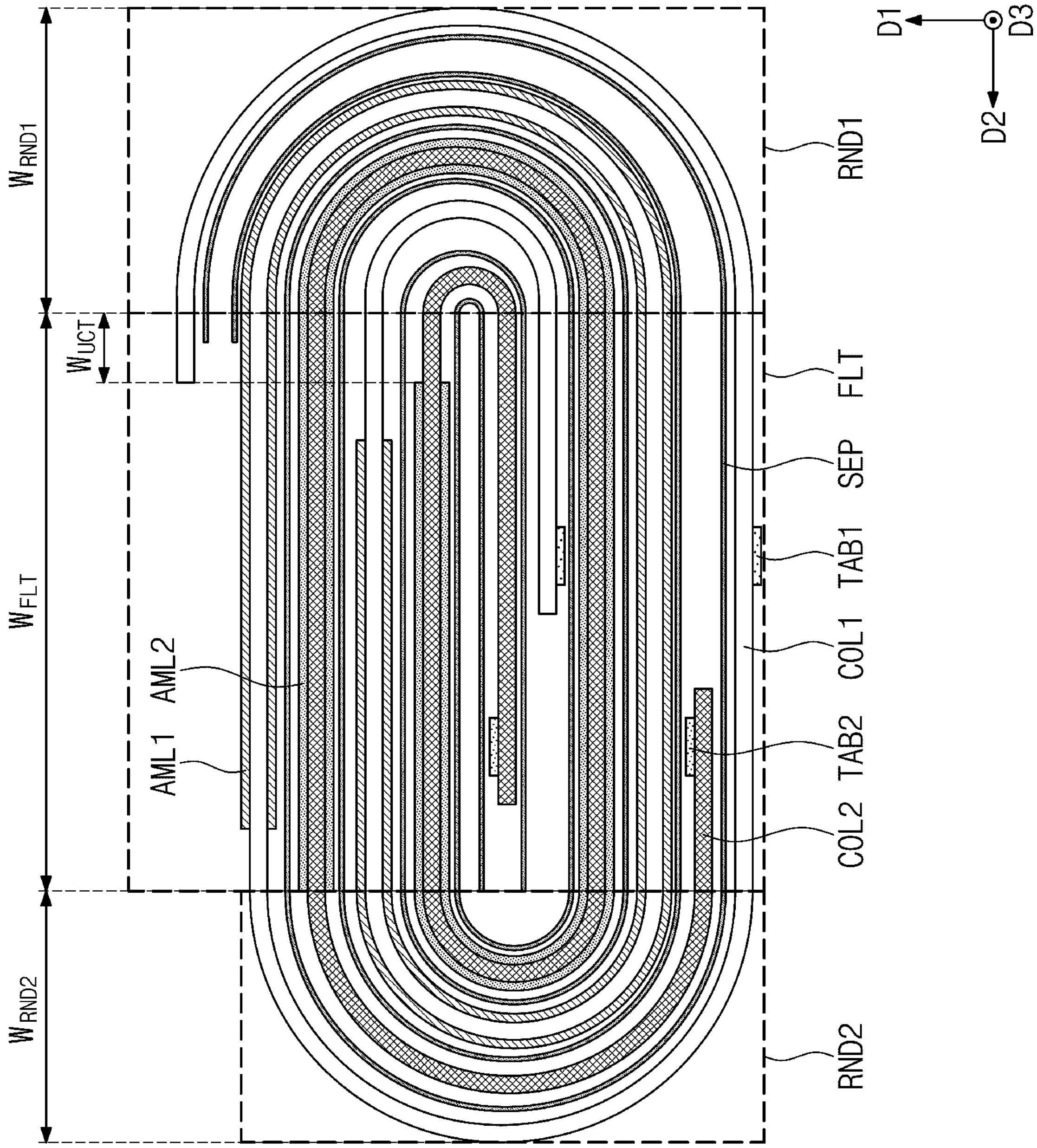
W_RND1
W_UCT
W_FLT
W_RND2
AML1
AML2
RND1
FLT
SEP
TAB1
COL1
TAB2
COL2
RND2
D1
D2
D3

FIG. 7

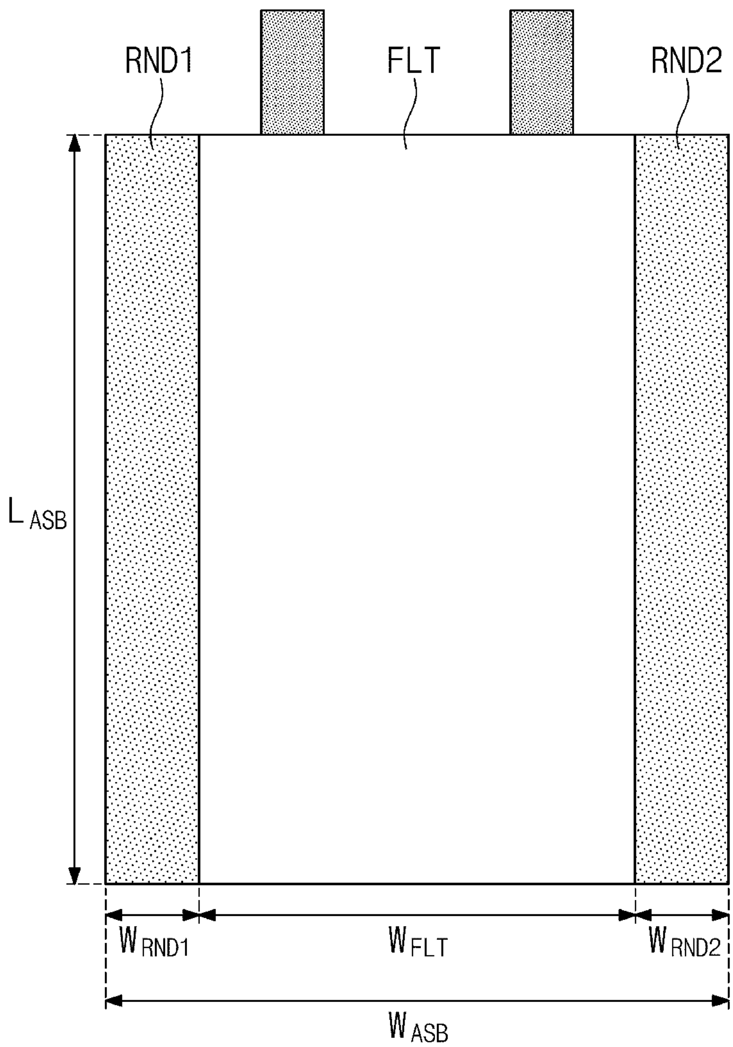

FIG. 8

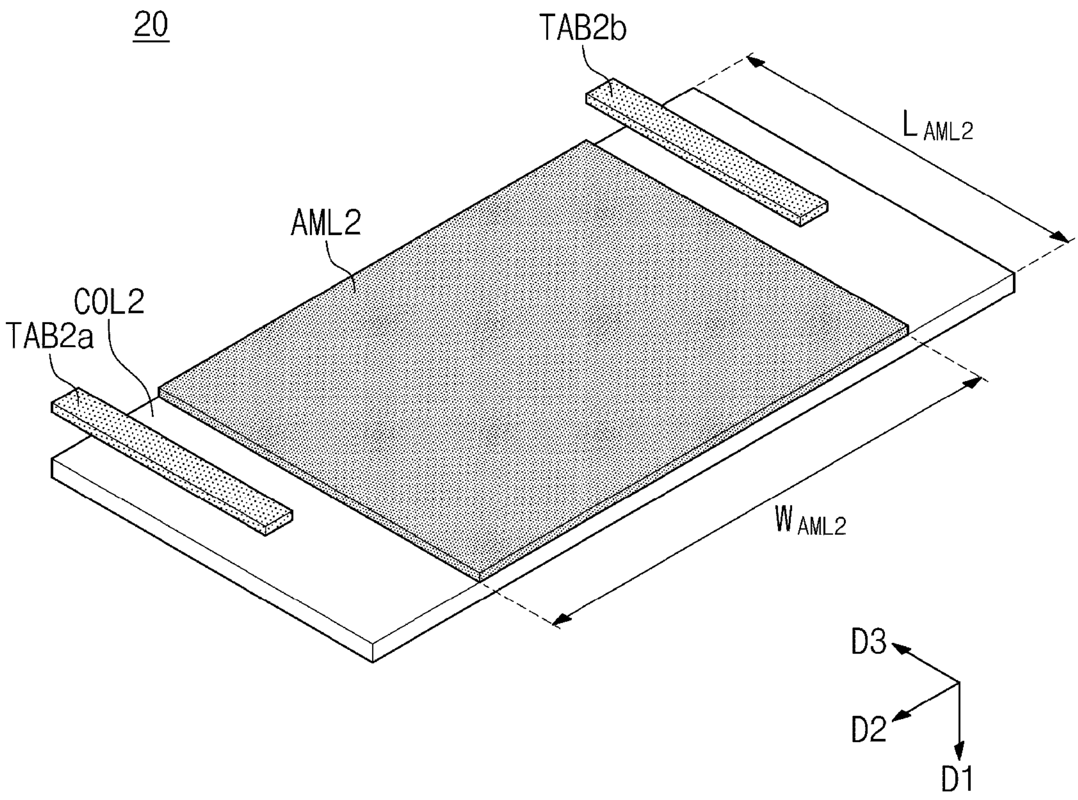
20
TAB2b
$L_{AML2}$
AML2
COL2
TAB2a
$W_{AML2}$
D3
D2
D1

FIG. 9

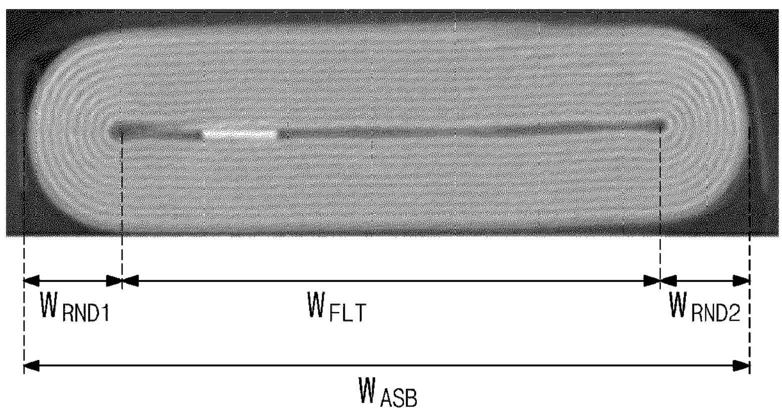
$W_{RND1}$
$W_{FLT}$
$W_{RND2}$
$W_{ASB}$

FIG. 10

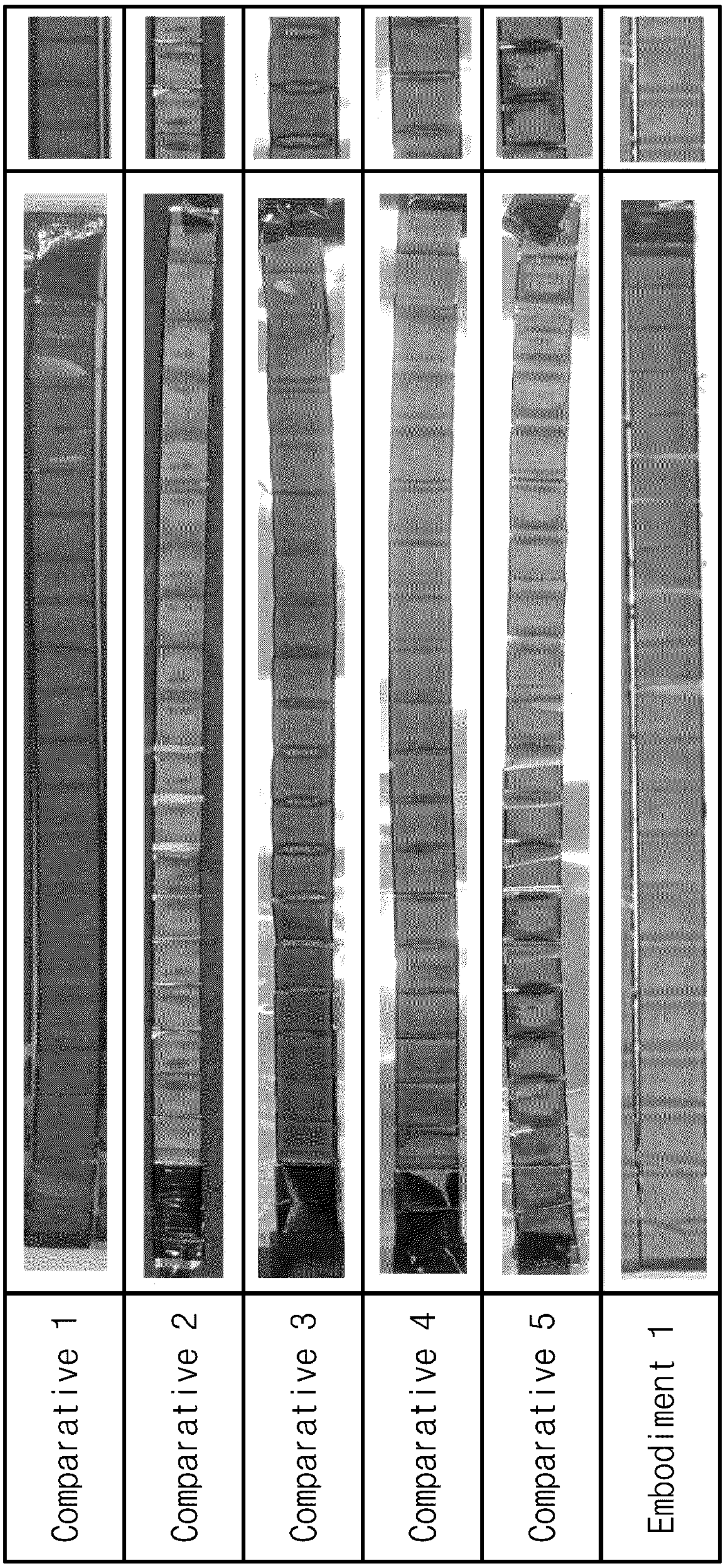
Comparative 1
Comparative 2
Comparative 3
Comparative 4
Comparative 5
Embodiment 1

FIG. 11